# EUROPEAN PATENT APPLICATION

(11) **EP 1 562 362 A1**
(43) Date of publication of application: **10.08.2005**
(21) Application number: 04002594.2
(22) Date of filing: 05.02.2004
(51) Int. Cl.: H04N 1/21, H04N 1/00

(54) **Electronic device with host function**

(71) Applicant: Aiptek International Inc., Hsin-Chu300, Taiwan (TW)
(72) Inventor: Yeh, Jin-Fu, Hsinchu City 300 (TW); Tsai, Hsin-Chiem, Puzih City Chiayi County 613 (TW)
(74) Representative: Winkler, Andreas, Dr.

(57) **Abstract**

An electronic apparatus with host functions connects with peripheral devices by means of a manner of wire or wireless. The electronic apparatus can directly control the peripheral devices to operate the peripheral devices or control transmission of data or signals between the electronic apparatus and the peripheral devices.

## Description

### BACKGROUND OF THE INVENTION

### 1. Field of the Invention

This invention relates to an electronic device, and more particularly to an electronic device with host functions.

### 2. Description of the Prior Art

Due to the highly development of technology, every type of products, even unknown types before as digital cameras, hand-writings, IC recorders, digital video cameras, and so on, is developed and manufactured one by another. These products may have been appeared, but the products are produced and become popular commodities until the key technologies thereof are broke, or the related technologies are completed and the products are produced within several years.

Most factories aim at the development of themselves product fields, but they ignore to integrate the products with other products in operation and utilization. It results in that users must control or connect with products of respective fields through a host, such as personal computers.

In addition, some factories integrate some functions in fields close to each other to make a new product, to raise using or carrying convenience for users. For example, the earlier digital cameras have the function of only capturing image and the recent digital cameras have a video recording function or a sound recording function with long time, and even some digital cameras have the above-mentioned three functions.

Developments of these integrated products may be welcome news for consumers, which yet do not buy these products. However, if some consumers that have products with related functions buy the integrated products, they have a vexation that functions of owning products are same. Moreover, the functions of these integrated products are generally basic functions and can not fulfil consumers' requirements. Nevertheless, if these consumers buy a product with only a requiring function, they can not integrate the product with other products, which they had, in operation or utilization.

For instance, a mobile phone with an image capturing function has low resolution in its capturing images. If a user hopes to deliver an image with a high resolution to the other, he must use a digital camera to capture the image. However, the mobile phone can not directly connect with the digital camera. They must connect with each other by a personal computer that transfers the image data of the digital camera to the mobile phone for delivering. If the other user received the image data and hopes to show it with a larger monitor, he must read the image data by a personal computer and shows it in other monitor, such as a computer monitor or a TV monitor.

As aforementioned, due to respective electronic devices can not be integrated with each other in operation and utilization, the electronic devices must connect with each other by a personal computer. It results in drawbacks comprising an installation of application programs and carrying a computer additionally. That causes users a using or carrying inconvenience.

### SUMMARY OF THE INVENTION

Therefore, the present invention has been made in view of the above problems in the prior arts, and it is an objective of the present invention to provide an electronic device with host functions, which directly controls other peripheral devices.

Another objective of present invention is to provide an electronic device with host functions, which directly read data in other peripheral devices.

Another objective of present invention is to provide an electronic device with host functions to integrate peripheral devices with each other in operation and utilization.

Still another objective of present invention is to provide an electronic device with host functions, which can identify new or more other peripheral devices by updating data.

Another objective of present invention is to provide an electronic device with host functions, which can control new or more other peripheral devices by updating operation.

As aforementioned, the present invention provides an image capture apparatus with host functions comprising the image capture device and a transferring device. The transferring device is mounted on the image capturc device, and the image capture apparatus controls a peripheral device connected with the image capture apparatus through the transferring device, wherein the peripheral device has a key-in device or storing means.

The present invention also provides an image capture apparatus with host functions comprising the image capture device and a transferring device. The transferring device is mounted on the image capture device, and the image capture apparatus through said transferring device controls a peripheral device connected with the image capture apparatus by a wireless method.

The present invention also provides a method for employing an image capture apparatus with host functions, comprising the steps below. First, an image capture device is connected with a peripheral device. Then, the image capture device identifies the peripheral device. Finally, the image capture device performs an application program to control the peripheral device.

The present invention employs the above-mentioned image capture apparatus with host functions to easily control or operate a peripheral device, and to utilize functions of the peripheral device or bring new functions after connecting. These functions are implemented by performing application programs stored in the image capture device or the peripheral device. Moreover, the image capture device can correctly identify peripheral devices by updating the firmware or identifying data. The identifying data may be stored in respective peripheral device to achieve instantly update data during connecting.

### BRIEF DESCRIPTION OF THE DRAWINGS

FIG. 1 is a schematic diagram of a digital camera connecting a hand-writing by a connecting wire in one preferred embodiment of the present invention;
FIG. 2 is a schematic diagram of a videophone connecting a hand-writing by a connecting wire in another preferred embodiment of the present invention; and
FIG. 3 is a schematic diagram of a digital camera connecting storing means by a connecting wire in another preferred embodiment of the present invention.

### DESCRIPTION OF THE PREFERRED EMBODIMENT

Some sample embodiments of the invention will now be described in greater detail. Nevertheless, it should be recognized that present invention can be practiced in a wide range of other embodiments besides those explicitly described, and the scope of the present invention is expressly not limited expect as specified in the accompanying claims.

Then, the components of the different elements are not shown to scale. Some dimensions of the related components are exaggerated and meaningless portions are not drawn to provide a more clear description and comprehension of the present invention.

The essential of the present invention is to employ an electronic device with host functions, which electrically couples to other peripheral devices, i.e. connecting with other peripheral devices by a wire or wireless method. Thereby, the electronic device with host functions can control other peripheral devices directly to use other peripheral devices or to manage date or signals transmitting there between.

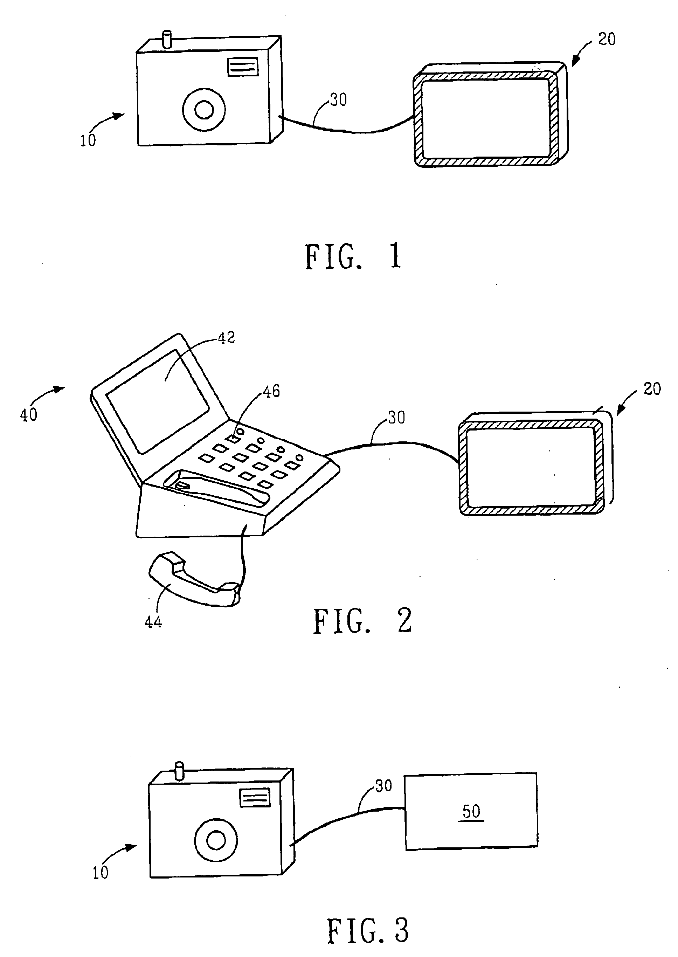

FIG. 1 is a schematic diagram of one preferred embodiment in the present invention. A digital camera 10 is connected with a hand-writing 20 by a connecting wire 30. When the digital camera 10 is connected with the hand-writing 20, a mode of the digital camera 10 can be changed into a connecting mode by a mode selecting bottom or an operating menu or the digital camera 10 can automatically determine to change the mode into the connecting mode. The digital camera 10 under the connecting mode may be transferred image or other data to the hand-writing 20. Alternatively, the digital camera 10 under the connecting mode may be received data from the hand-writing 20 and thereby a user may add/amend data in the digital camera 10 through the hand-writing 20. For example, the user can sign or add a descriptive word by employing the hand-writing 20 after capturing an image by the digital camera 10.

Moreover, the digital camera 10 itself has some application programs, and automatically enforces these application programs for using functions of the hand-writing 20 or additional functions corresponding to the connecting state, when the digital camera 10 is connected with the hand-writing 20. Operating messages of the application programs can be displayed in an LCD monitor of the digital camera 10 or the hand-writing 20. The addition/amendment of the above-mentioned signature or descriptive word can be changed character color, character size, etc with the application programs. Furthermore, the image can be adjusted with the application programs.
That is, the image is displayed in the LCD monitor of the digital camera 10 (or the monitor of the hand-writing 20) and an operating menu of an application program is displayed in the monitor of the hand-writing 20 (or the LCD monitor of the digital camera 10), and thus an image processing is proceeded. The application programs are not only stored in the digital camera 10,but stored in the hand-writing 20 or an external storing device, such as a memory card for digital camera. The application programs is proceeded by the digital camera 10 or the hand-writing 20 reading the data of the application programs stored in the aforementioned storing device.

The digital camera 10 may be replaced with an electronic device as a digital video camera, which has a storing device of a memory card, a hard disk and so on. The hand-writing 20 may be replaced with any other peripheral device, such as a PDA (Personal Digital Assitant), a mouse, a keyboard, a mobile phone, a TV monitor, a computer monitor, and so on. The electronic device having a storing device can identify more or new peripheral devices or have new functions by updating its firmware or stored application programs. Additionally, the application program or identifying data may be stored in a peripheral device, so the electronic device directly use a suitable application program or identifying data when connecting with the peripheral device.

The above-mentioned connecting wire 30 may be a connecting wire of recent transmission protocols, i.e. the connecting interface of the digital camera 10 or the hand-writing 20 is RS-232, PS/2, COM port, Parallel port, USB, IEEE1394, and so on. Alternatively, a wireless method may also be employed and the connecting wire 30 is abridged. The wireless method may be any one type of wireless transmission protocols or wireless transmission systems, comprising IrDA, WLAN, bluetooth, HF, GSM, GPRS, PHS, DECT, CDMA, etc.

Particularly, the distance between the digital camera 10 and the peripheral devicc is not limited with a wireless method. For instance, the digital camera 10 may control a fax or a printer to print an image through a wireless communication protocol of IrDA or bluetooth. In addition, a digital camera having a communicating function (or a mobile phone having a photographing function) may be transferred data to a fax or printer in office through GSM or PHS and a colleague instantly obtains a requiring data.

FIG. 2 is a schematic diagram of another preferred embodiment in the present invention. A videophone 40 is connected with a hand-writing 20 by a connecting wire 30. The videophone 40 comprises a monitor 42, microphone 44, and keys 46. When the videophone 40 is connected with the hand-writing 20, a mode of the videophone 40 can be changed into a connecting mode by a mode selecting bottom or an operating menu, or the videophone 40 can automatically determine to change the mode into the connecting mode. The videophone 40 under the connecting mode may transfer image or other data to the hand-writing 20. Alternatively, the videophone 40 under the connecting mode may receive data from the hand-writing 20 and thereby a user may add/amend data in the videophone 40 through the hand-writing 20. For example, the user can sign or draw a picture by employing the hand-writing 20 to help the other more understand talking content, during using the videophone 40.

Similarly, the videophone 40 itself also has some application programs, and automatically enforces these application programs for using functions of the hand-writing 20 or additional functions corresponding to the connecting state when the videophone 40 is connected with the hand-writing 20. Operating messages of the application programs can be displayed in the monitor 42 of the digital camera 10 or the hand-writing 20.

A characteristic of the above-mentioned signature or picture, as color, size, etc, can be changed with the application programs. The application programs are not only stored in videophone 40, but also stored in the hand-writing 20 or an external storing device. The application programs is proceeded by the videophone 40 or the hand-writing 20 reading the data of the application programs stored in the aforementioned storing device.

The above-mentioned connecting wire 30 may be a connecting wire of recent transmission protocols, i.e. the connecting port in the videophone 40 or the hand-writing 20 is RJ-11, PS/2, COM port, Parallel port, USB, IEEE1394, and so on. Alternatively, a wireless method may be employed and the connecting wire 30 is abridged. The wireless method may be any one type of wireless transmission protocols or wireless transmission systems, comprising IrDA, WLAN, bluetooth, HF, GSM, GPRS, PHS, DECT, CDMA, etc.

FIG. 3 is a schematic diagram of one more preferred embodiment in the present invention. A digital camera 10 is connected with storing means 50 by a connecting wire 30. When the digital camera 10 is connected with the storing means 50, a mode of the digital camera 10 can be changed into a connecting mode by a mode selecting bottom or an operating menu or the digital camera 10 can automatically determine to change the mode into the connecting mode. The digital camera 10 under the connecting mode may transfer image or other data to the storing means 50. Alternatively, the digital camera 10 under the connecting mode may receive data from the storing means 50 and thereby a user may add/amend data or display an image in the storing means 50 through the digital camera 10. For example, the user can display an image stored in the storing means 50 in the digital camera 10 and then proceeds a deleting or modifying action.

Moreover, the digital camera 10 itself has some application programs, and automatically enforces these application programs for using functions of the storing means 50 or additional functions corresponding to the connecting state when the digital camera 10 is connected with the storing means 50. Operating messages of the application programs can be displayed in an LCD monitor of the digital camera 10 or the storing means 50. The application programs may have functions of displaying, adding, deleting, modifying (rotating, resizing, color adjusting, noise filtering), and so on.

Recently, a user needs to carry several memory cards or a portable storage device due to the capacity limitation of memory cards. Even if the user carry the memory cards or the portable storage device, the user needs to change memory card or take out a memory card inside the digital camera 10 and proceeds a transferring action to transfer the image data to the portable storage device, and then continues taking a picture.

The digital camera 10 may be replaced with an electronic device as a digital video camera, which has a storing device of a memory card, a hard disk and so on. The storing means 50 may be a portable storage device (having a hard disk inside), a flash disk, a writer (as CD-R/RW, DVD±R/RW, DVD-RAM, MD, MO), an IC record, a PDA, or a personal computer. The digital camera 10 can transfer its data to the storing means 50 automatically or manually when connecting with the storing means 50. Hence, such electronic device requiring a storing device can overcome the limitation of the storing capacity by connecting a storing means with a larger capacity and automatically or manually transferring data to the storing means instantly or at an internal between taking pictures. The digital camera 10 can identify more or new peripheral devices or have new functions by updating its firmware or stored application programs. Additionally, the application program or identifying data may be stored in a peripheral device, so the digital camera 10 directly use a suitable application program or identifying data when connecting with the peripheral device.

The above-mentioned connecting wire 30 may be a connecting wire of recent transmission protocols, i.e. the connecting interface of the digital camera 10 or the storing means 50 is RS-232, PS/2, COM port, Parallel port, USB, IEEE1394, and so on. Alternatively, a wireless method may also be employed and the connecting wire 30 is abridged. The wireless method may be any one type of wireless transmission protocols or wireless transmission systems, comprising IrDA, WLAN, bluetooth, HF, GSM, GPRS, PHS, DECT, CDMA, etc.

Still another embodiment of the present invention is to connect an image capture apparatus with a display monitor, such as a computer monitor. The computer monitor generally has a D-sub, a DVI, or a BNC of video port. The image capture apparatus (for example: a digital camera and a digital video camera) may transfer image data to the display monitor through a transferring device mounted on the image capture apparatus, and the display monitor is preferably a computer monitor. Due to the computer monitor has a better resolution than a TV monitor, a user can obtain a better displaying effect. The image capture apparatus may control the image to perform several function comprising rotation, amendment, adjustment, and so on.

According to the aforementioned embodiments, it can be seen, that the present invention not only integrates functions of two electronic (peripheral) devices by connecting the two electronic devices with each other, but also brings new functions, which does not exist before connecting, with application programs, such as the above-mentioned function of image processing that does not exist in the digital camera or the hand-writing.

As aforementioned, the present invention also provides a method for employing an electronic device with host functions to operate or control a peripheral device. For example of an image capture apparatus with host functions, first an image capture device is connected with a peripheral device. Then, the image capture device identifies the peripheral device. Finally, the image capture device performs an application program to control the peripheral device. If the image capture device can not identify the peripheral device, users may update the firmware or identify data to make the image capture device identify the peripheral device, or the image capture device may read identify data from the peripheral device to identify the peripheral device. The aforementioned application programs may be stored in the image capture device or the peripheral device.

Although specific embodiments have been illustrated and described, it will be obvious to those skilled in the art that various modifications may be made without departing from what is intended to be limited solely by the appended claims.

## Claims

1. An image capture apparatus with host functions, comprising:
an image capture device; and
a transferring device mounted on said image capture device, said image capture device controlling a peripheral device connected with said image capture device through said transferring device, wherein said peripheral device has a key-in device or storing means.

2. The image capture apparatus in claim 1, wherein said image capture device receives data from said peripheral device.

3. An image capture apparatus with host functions, comprising:
an image capture device;
a display monitor; and
a transferring device mounted on said image capture device, said image capture device controlling image data transferred to said display monitor through said transferring device to display images on said display monitor.
